# EUROPÄISCHE PATENTSCHRIFT

(11) **EP 0 734 753 B1**
(45) Veröffentlichungstag und Bekanntmachung des Hinweises auf die Patenterteilung: **27.09.2000**
(21) Anmeldenummer: 95104590.5
(22) Anmeldetag: 29.03.1995
(51) Int. Cl.: B01D 46/10, B60H 3/06, B29C 45/14

(54) **Verfahren zur Herstellung von Filtern**
Process for preparing filters
Procédé pour la préparation de filtres

(43) Veröffentlichungstag der Anmeldung: 02.10.1996
(73) Patentinhaber: TRE EFFE Quality s.r.l., 45010 Rosolina (Rovigo) (IT)
(72) Erfinder: Dario, Favero, I-45010 Rosolina (IT)
(74) Vertreter: Gustorf, Gerhard, Dipl.-Ing.

(56) Entgegenhaltungen:
- EP-A- 0 448 876
- US-A- 3 807 146
- US-A- 4 579 658

## Beschreibung

Die Erfindung betrifft ein Verfahren zum Herstellen von Filtereinsätzen nach dem Oberbegriff des Patentanspruchs 1 sowie einen Filtereinsatz mit wenigstens einer Filtrierschicht und einem mit dieser fest verbundenen Rahmen aus Kunststoff.

Aus der EP-A-448 876 sind ein Filtereinsatz und ein zu dessen Herstellung vorgesehenes Verfahren bekannt, gemäß dem der Kunststoff von unten nach oben so eingespritzt wird, daß er die Filtrierschicht im späteren Rahmenbereich unterbricht, so daß diese nur mit der inneren Seite des Rahmens verbunden ist. Im Betrieb besteht somit die Gefahr, daß aufgrund der einwirkenden Drücke die Filtrierschicht im Bereich der Rahmenwand einreißt oder sich vom Rahmen löst. Hinzu kommt, daß der Rahmen selbst, der im wesentlichen nur über die Oberseite der Filtrierschicht mit einer senkrechten Wand hervorragt, an den vier Seiten eine vorstehende Dichtkante bildet, die in Abhängigkeit von den Elastizitätseigenschaften des verwendeten Kunststoffes in vielen Fällen zu steif ist, um die notwendige Dichtwirkung ausüben zu können.

Im Bereich der Klimaanlagen für Fahrzeuge besteht das Problem der Herstellung von guten Filtern zu geringen Kosten. Es ist außerdem bekannt, daß die Filter ihre Wirkung nur für einen relativ geringen Zeitraum beibehalten und sie dann von Zeit zu Zeit ersetzt werden müssen.

Man kennt Filter, die aus einer Filtrierschicht und fallweise auch aus einem Staubschutztuch bestehen, die beide auf einem festen Plastikrahmen montiert sind. Genauer gesagt werden zwei Kunststoffgestelle so zusammengesetzt, daß sie die Filtrierschicht und das Staubschutztuch dazwischen festhalten. Rund um den Rahmen ist eine Dichtung aus Schaumstoff angebracht, um die Dichte des Filters zu gewährleisten. Die Herstellung dieser Filter ist kostenaufwendig, und der hohe Verkaufspreis veranlaßt den Fahrzeugbesitzer, sie nicht innerhalb der vorgegebenen Zeiträume auszutauschen. Es ist nämlich notwendig, die einzelnen Bestandteile getrennt herzustellen und sie dann zusammenzusetzen; dabei werden verschiedene Geräte eingesetzt, viel Zeit investiert, es treten Schwierigkeiten bei der Zusammenführung der Einzelteile sowie Herstellungsmängel auf.

Um diesen Problemen entgegenzuwirken wurde ein neuer Filter für Klimaanlagen und Sauglüfter bestehend aus einem einzigen Teil entwickelt und hergestellt Die wesentlichen Merkmale der Erfindung ergeben sich aus den Kennzeichen der Patentansprüche 1 und 2.

Der neue Filter besteht aus einem Filtriermaterial, auf das der feste Kunststoffrahmen aufgesetzt wird; genauer gesagt wird der feste Rahmen des Filters selbst auf das Filtriermaterial gesintert.

Das Herstellungsverfahren dieses Filters sieht vor, daß in der Ausführungsphase eine (oder mehrere) Filtrierschichten zwischen den zwei gegenüberliegenden Teilen des Spritzwerkzeugs zur Herstellung des festen Rahmens eingesetzt werden und nach dem Schließen der zwei Teile der Kunststoff eingespritzt wird. Dieser Kunststoff verteilt sich nicht nur in den Hohlräumen des Formwerkzeugs, sondern dringt dort, wo es sich zwischen den Rahmenteilen befindet, auch in die Fasern des Filtriergewebes ein, so daß das Gewebe mit dem Rahmen vermengt wird.

In den Hohlräumen der Werkzeughälften kann die Oberfläche zwischen den Rillen, die die Stäbe der Struktur bilden, leicht vertieft sein, um das Filtriermaterial während des Spritzvorgangs ein wenig verschäumt zu halten.

Als Ersatz für die derzeit verwendete Schaumstoffdichtung am Rand des Plastikrahmens kann man die Filtrierschichten benutzen, indem sie etwas größer als die Kunststoffstruktur gehalten werden, so daß die Filtrierschicht selbst mit dem über den Rand hinausragenden Teil die Funktion einer Dichtung übernimmt.

Die oben beschriebenen Filter für Klimaanlagen für Fahrzeuge sowie ihre Herstellung verringern erheblich die Anzahl der verwendeten Teile, das Verfahren der Zusammensetzung wird vereinfacht, fehlerhaftes Material und Mängel werden ebenso fast vermieden.

Mit der in der Anlage angeführten und anschließend beschriebenen Zeichnung wird ein praktisches, nicht einschränkendes Beispiel für die Herstellung eines solchen Filters gezeigt.

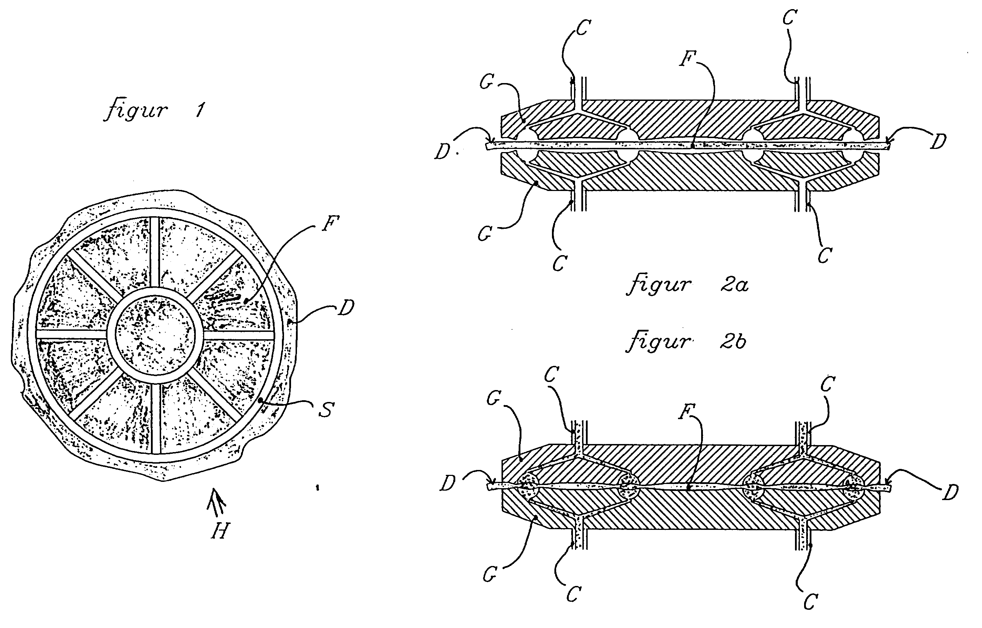

Figur. 1 zeigt ein Modell des neuen Filters H , der aus einer Filtrierschicht F besteht, auf die die Kunststoffstruktur des Rahmens S gesintert (gespritzt) wurde; die Filtrierschicht F hat etwas größere Ausmaße als die Kunststoffstruktur des Rahmens S , und der Teil, der über den Rand hinausragt, dient als Dichtung D am Rand des Filters H .
Figur. 2a zeigt einen Querschnitt der beiden Werkzeughälften G zur Herstellung der festen Kunststoffstruktur des Filters , während sie sich schließen; zwischen den beiden Hälften befindet sich die Filtrierschicht F .
In Figur. 2b sind die beiden Werkzeughälften G geschlossen, und es wird das Kunststoffharz eingespritzt. Die Filtrierschicht F ist etwas größer als die Werkzeughälften G und der Rahmen S. Indem das Harz in die Hohlräume C der Werkzeughälften G eingespritzt wird, wird auch das Filtriermaterial F in all den Teilen, die sich innerhalb der Struktur des Rahmens S befinden, mit Harz imprägniert.

## Patentansprüche

1. Verfahren zum Herstellen von Filtereinsätzen (H) mit wenigstens einer Filtrierschicht (F), die zwischen zwei Werkzeughälften (G) einer Spritzgießmaschine eingeklemmt wird, worauf zur Bildung eines Rahmens (S) Kunststoff eingespritzt wird, der sich im Bereich des Rahmens (S) mit der Filtrierschicht (F) verbindet, dadurch gekennzeichnet, daß der Kunststoff durch die eine Werkzeughälfte (G) auf die Oberseite und durch die andere Werkzeughälfte (G) auf die Unterseite der Filtrierschicht (F) gespritzt wird, wodurch diese durch den Kunststoff beidseitig in der Weise abgedeckt wird, daß sie zwischen zwei Hälften des Rahmens (S) sandwichartig eingebettet ist und über den ganzen Umfang des Rahmens (S) unter Bildung einer außen über den ganzen Umfang umlaufenden Randdichtung (D) hervorsteht.

2. Filtereinsatz (H) mit wenigstens einer Filtrierschicht (F) und einem mit dieser fest verbundenen Rahmen (S) aus Kunststoff, dadurch gekennzeichnet, daß der Rahmen (S) aus einer oberen und einer unteren Rahmenhälfte besteht, die beide die Filtrierschicht (F) sowohl von ihrer Oberseite als auch von ihrer Unterseite sandwichartig zwischen sich einschließen, und daß die Filtrierschicht (F) über den ganzen Umfang des Rahmens (S) hervorsteht und eine an diesem außen umlaufende Randdichtung (D) bildet.

3. Filtereinsatz nach Anspruch 2, dadurch gekennzeichnet, daß der Rahmen (S) in Draufsicht aus zwei konzentrischen, kreisförmigen Ringen besteht, die durch Speichen miteinander verbunden sind.

## Claims

1. Process for preparing filter cartridges (H) comprising at least one filtering layer (F) which is pinched between two mould halves (G) of an injection moulding machine, whereupon plastic material in injected to form a frame (S), said plastic material coalescing with the filtering layer (F) in the zone of said frame (S), characterized in that the plastic material is injected through one of said mould halves (G) to the upper surface and through the other mould half to the lower surface of said filtering layer (F) which in this way is covered on both sides by said plastic material such that it is sandwich embedded between two halves of said frame (S) and protrudes from the entire circumference of the frame (S) where it forms a rim gasket (D) running along the entire circumference.

2. Filter cartridge (H) comprising at least one filtering layer (F) and a frame (S) of plastic firmly joined with said layer, characterized in that said frame (S) is made up of an upper and a lower half both sandwich embedding said filtering layer (F) on its upper and on its lower surface, and that said filtering layer (F) protrudes from the entire circumference of the frame (S) where it forms a rim gasket (D) running along the outer circumference of said frame (S).

3. Filter cartridge as defined in claim 2, wherein said frame (S) comprises, in plan view, two concentric circular rings connected by spokes.

## Revendications

1. Procédé pour la préparation de cartouches filtrantes (H) comprenant au moins une couche filtrante (F) qui est serrée entre deux moitiés de moule (G) d'une presse d'injection, après quoi on injecte une matière plastique pour former un cadre (S) laquelle matière se combine à la couche filtrante (F) dans la zone du cadre (S), caractérisé par le fait que la matière plastique est injectée à travers une des moitiés de moule (G) sur la surface supérieure et à travers l'autre moitié de moule (G) contre la surface inférieure da la couche filtrante (F) laquelle de cette manière est couverte sur les deux faces par la matière plastique de sorte qu'elle est encastrée à la façon d'un sandwich entre les deux moitiés du cadre (S) et fait saillie sur toute sa circonférence pour former un anneau d'échanchéité circulant sur la circonférence extérieure.

2. Cartouche filtrante (H) comprenant au moins une couche filtrante (F) et un cadre (S) de matière plastique fermement relié à la couche, caractérisée par le fait que le cadre (S) se compose d'une moitié supérieure et d'une moitié inférieure lesquelles remferment entre elles à la facon d'un sandwich la couche filtrante (F) de la surface supérieure et de la surface inférieure, et que la couche filtrante (F) fait saillie sur toute la circonférence du cadre (S) pour y former un anneau d'échanchéité extérieur.

3. Cartouche filtrante selon la revendication 2, caractérisée par le fait que le cadre (S) se compose en plan de deux anneaux circulaires concentriques reliés par des rayons.
